# DEMANDE DE BREVET EUROPEEN

(11) **EP 1 394 435 A1**
(43) Date de publication de la demande: **03.03.2004**
(21) Numéro de dépôt: 03300075.3
(22) Date de dépôt: 29.07.2003
(51) Int. Cl.: F16D 23/12

(54) **Fourchette de débrayage multirapports pour un embrayage à câble de véhicule automobile**

(30) Priorité: 27.08.2002 FR 0210616
(71) Demandeur: Renault s.a.s., 92100 Boulogne Billancourt (FR)
(72) Inventeur: Chouchana, Richard, 92220, Bagneux (FR)

(57) **Abrégé**

L'invention concerne une fourchette de débrayage (70) pour un embrayage à câble de véhicule automobile, ladite fourchette de débrayage étant montée pivotante par un point de sa longueur (60) situé entre ses extrémités, de façon à transmettre le mouvement d'un câble actionné par la pédale d'embrayage à une butée de débrayage, ladite fourchette de débrayage comprenant une première extrémité fourchue qui coopère avec ladite butée de débrayage et une seconde extrémité (52) dans laquelle est formée une boutonnière concave percée en son centre d'un trou (52) pour le passage du câble, la position relative dudit point de pivotement par rapport à ladite première extrémité de la fourchette et à ladite boutonnière définissant un premier rapport de démultiplication.

Cette fourchette est caractérisée en ce qu'elle comporte également entre ledit point de pivotement (60) et la première boutonnière au moins une autre boutonnière (72) percée d'un trou (74) pour le passage dudit câble et qui correspond à au moins un second rapport de démultiplication.

## Description

La présente invention concerne une fourchette de débrayage utilisable dans un embrayage du type à câble de véhicule automobile pour obtenir plusieurs rapports de démultiplication.

On rappelle que la fonction d'un embrayage est d'interrompre la transmission du mouvement du moteur pour qu'il puisse tourner indépendamment des roues et pour permettre l'engagement des diverses combinaisons du changement de vitesses.

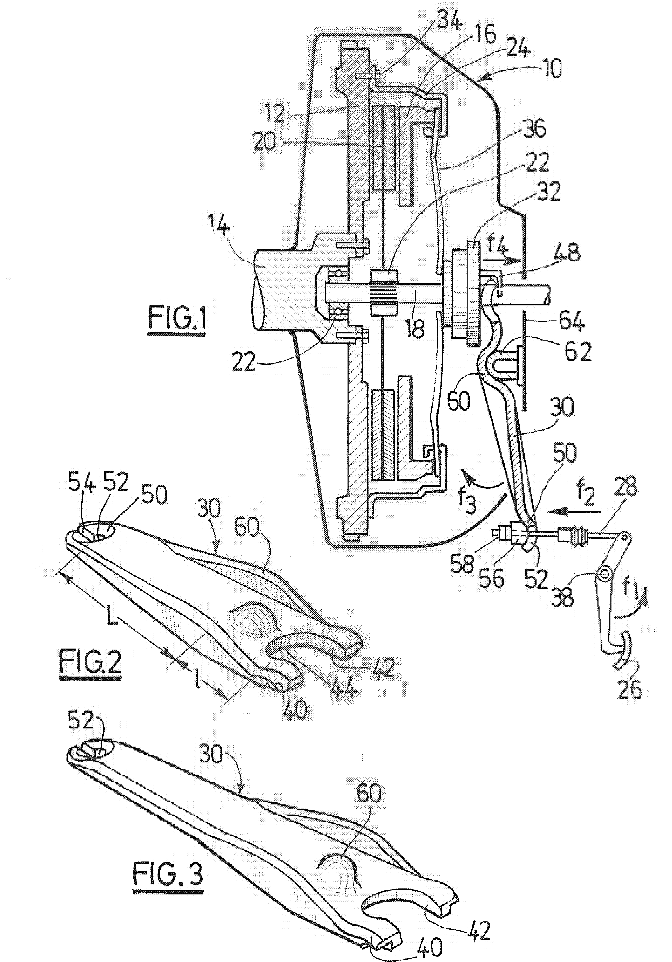

Pour bien situer le problème que l'invention cherche à résoudre, on décrira un embrayage à câble classique en se référant aux figures 1 à 3 ci-jointes qui représentent respectivement une vue en coupe axiale de l'embrayage, une vue en perspective de la fourchette de débrayage de la figure 1, ladite fourchette ayant un certain rapport de démultiplication, et une vue en perspective de la fourchette de débrayage ayant un rapport de démultiplication différent de celui de fourchette de la figure 2.

L'embrayage 10 représenté sur la figure 1 comprend un volant moteur 12 boulonné sur le vilebrequin 14 et tournant donc avec lui, un plateau de pression annulaire 16 monté coaxialement autour de l'arbre primaire 18 et un disque d'embrayage 20 pourvu d'un moyeu cannelé 22 ; le disque 20 est donc relié en rotation à l'arbre primaire et est mobile axialement le long de cet arbre. Le disque d'embrayage est monté en sandwich entre le plateau de pression et le volant moteur.

L'embrayage comprend également un mécanisme d'embrayage 24 qui est actionné depuis la pédale d'embrayage 26 du véhicule par l'intermédiaire d'un câble sous gaine 28, d'une fourchette de débrayage 30 et d'une butée d'embrayage 32.

Le mécanisme d'embrayage 24 est relié au volant moteur 12 par sa périphérie au moyen de boulons 34. Il comporte une pluralité de lames radiales ou becs de diaphragme 36 qui sont fixés à leur extrémité extérieure sur le mécanisme d'embrayage et qui sont libres à leur extrémité intérieure.

La butée d'embrayage 32 est montée coulissante sur l'arbre primaire par l'intermédiaire d'un roulement à billes et elle est maintenue en appui contre les extrémités intérieures des becs de diaphragme par la fourchette de débrayage 30.

La fourchette de débrayage est réalisée en tôle, en fonte ou en acier, par moulage ou par emboutissage d'une plaque sensiblement rectangulaire. Comme le montre la figure 2, la fourchette comprend une extrémité fourchue comprenant deux ergots 40, 42 qui définissent entre eux une encoche 44 sensiblement semi-circulaire. L'encoche s'adapte autour de l'arbre primaire 18 et les ergots viennent s'ancrer sur des crochets 48 (figure 1) fixés sur la face arrière de la butée d'embrayage 30.

A son autre extrémité, la fourchette présente une portion concave 50 ou boutonnière percée en son centre d'un trou 52 qui se prolonge jusqu'à ladite extrémité par une fente 54. Cette fente sert à faire passer l'extrémité du câble 28, sur laquelle a été préalablement vissé un écrou 56, jusque dans le trou. L'écrou est pourvu d'une surface extérieure hémisphérique convexe qui vient s'adapter dans le creux de la boutonnière. Cet écrou est verrouillé au moyen de deux écrous simples 58.

Pour des raisons de rapidité de montage, le câble est livré par le fournisseur déjà muni de l'écrou hémisphérique 56. Pour pouvoir le passer dans le trou, il est nécessaire de prévoir une fente 54 qui s'étend du trou 52 à l'extrémité de la fourchette. La fente 54 sert également à permettre le débattement du câble dans la boutonnière lorsque la fourchette pivote.

En un point intermédiaire de sa longueur, situé plus près de l'extrémité fourchue que de l'extrémité fendue, la fourchette présente une dépression hémisphérique 60 qui reçoit l'extrémité d'un pivot 62, lequel est fixé sur le carter 64 de l'embrayage. A la place du pivot, la fourchette peut être munie d'un axe de pivotement.

La figure 1 représente l'embrayage à l'état débrayé. Cet état est obtenu en enfonçant la pédale de débrayage 26. La butée 32 exerce alors une pression vers la gauche sur les extrémités intérieures des becs de débrayage 36, ce qui entraîne un retrait vers la droite des extrémités extérieures des becs. Le plateau de pression n'exerce pas de pression sur le disque d'embrayage, lequel se sépare du volant moteur 12. Le mouvement du vilebrequin 14 n'est alors pas transmis à l'arbre primaire.

Lorsqu'on relâche la pression sur la pédale 26, celle-ci pivote dans le sens de la flèche f₁ autour du pivot 38, ce qui provoque d'une part le déplacement du câble 28 dans le sens de la flèche f₂, d'autre part le pivotement de la fourchette 30, dans le sens de la flèche f₃ autour du pivot 62, et également le retrait de la butée d'embrayage 32 vers la droite. La pression sur les becs de diaphragme 36 est alors relâchée de sorte que leurs extrémités intérieures se déplacent légèrement vers la droite, tandis que leurs extrémités extérieures se déplacent vers la gauche et exercent une poussée sur le plateau de pression 16, lequel applique le disque d'embrayage 20 contre le volant moteur 12. Le mouvement du vilebrequin est alors transmis à l'arbre primaire 18.

La fourchette est caractérisée principalement par son rapport de démultiplication, qui dépend de chaque famille de boîte de vitesses et qui est fonction de la plage de couple moteur à transmettre. Le rapport de démultiplication est égal au rapport de la distance L entre le centre de la dépression 60 et le centre du trou 52 à la distance I entre le centre de la dépression et le centre de l'encoche 44.

Dans le mode de réalisation représenté sur la figure 1, ce rapport est égal à 2 et dans le mode de réalisation de la figure 3, il est égal à 3,3.

Jusqu'à présent, les constructeurs étaient obligés de prévoir autant de fourchettes qu'il y a de rapports de démultiplication, ce qui augmente le coût à l'unité ainsi que les frais de stockage et de gestion.

La présente vise à remédier à ces inconvénients et propose à cet effet, une fourchette de débrayage ayant plusieurs rapports de démultiplication.

L'invention concerne donc une fourchette de débrayage pour un embrayage à câble de véhicule automobile, du type comprenant une fourchette de débrayage montée pivotante par un point de sa longueur situé entre ses extrémités, de façon à transmettre le mouvement d'un câble actionné par la pédale d'embrayage à une butée de débrayage, ladite fourchette de débrayage comprenant une première extrémité fourchue qui coopère avec ladite butée de débrayage et une seconde extrémité dans laquelle est formée une boutonnière concave percée en son centre d'un trou pour le passage du câble, la position relative dudit point de pivotement par rapport à ladite première extrémité de la fourchette et à ladite boutonnière définissant un premier rapport de démultiplication, ladite fourchette étant caractérisée en ce qu'elle comporte également entre ledit point de pivotement et la première boutonnière au moins une autre boutonnière percée d'un trou pour le passage dudit câble et qui correspond à au moins un second rapport de démultiplication.

Selon une variante de l'invention, dans laquelle le câble est préalablement muni d'un écrou hémisphérique, le trou de la première boutonnière se prolonge jusqu'à ladite seconde extrémité par une fente, à travers laquelle le câble muni de l'écrou hémisphérique peut être passé latéralement jusqu'audit trou, et de même, le trou de chacune desdites autres boutonnières se prolonge par une fente qui débouche dans un évidement, à travers lequel l'écrou peut être passé.

Ainsi, la même fourchette selon l'invention peut être utilisée pour obtenir des rapports de démultiplication différents.

On décrira à présent un mode de réalisation de l'invention en regard des dessins annexés dans lesquels :
la figure 1 est une vue en coupe transversale d'un embrayage à câble connu, montrant en particulier une fourchette de débrayage classique de rapport de démultiplication prédéterminé ;
la figure 2 est une vue en perspective d'une autre fourchette de débrayage de la figure 1 ;
la figure 3 est une vue en perspective d'une autre fourchette de débrayage classique, ayant un rapport de démultiplication plus grand que celui de la figure 2 ;
la figure 4 est une vue en perspective d'une fourchette de débrayage selon l'invention ayant à la fois deux rapports de démultiplication différents ;
la figure 5 est une vue en coupe longitudinale de la fourchette de débrayage de la figure 4 ; et
la figure 6 est une vue en plan de la fourchette d'embrayage selon l'invention.

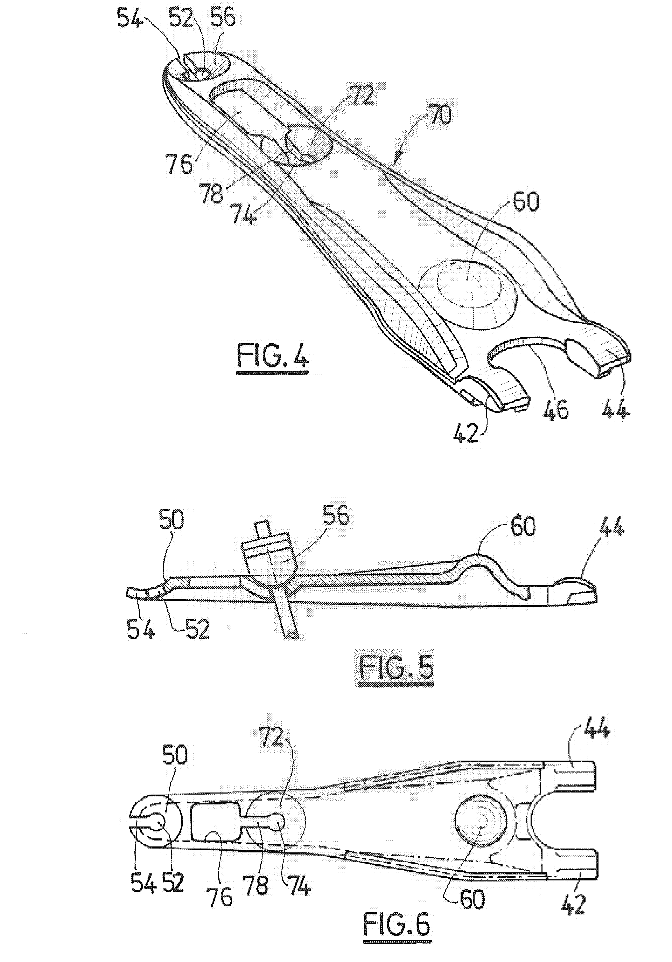

Les figures 1 à 3 ayant été décrites, on décrira directement la fourchette de débrayage selon l'invention en regard des figures 4 à 6.

La fourchette de débrayage 70 selon l'invention comprend plusieurs similitudes avec celle des figures 1 à 3. Elle comporte elle aussi une extrémité fourchue 42, 44 avec une encoche 46 entre elles pour s'adapter autour de l'arbre primaire, une boutonnière 50 à l'autre extrémité avec un trou 52 et une fente 54 pour le passage du câble et une dépression 60 pour recevoir un pivot, les positions relatives de la dépression par rapport au trou et à l'encoche correspondant à un premier rapport de démultiplication.

Selon l'invention, la fourchette de débrayage 70 comprend en outre une deuxième boutonnière 72 située entre la première boutonnière et la dépression 60. Cette boutonnière détermine avec la dépression et avec l'encoche un deuxième rapport de démultiplication inférieur au premier rapport de démultiplication. La seconde boutonnière 72 est percée en son centre d'un trou 74.

Pour pouvoir insérer dans le trou 74 l'extrémité du câble 34 munie de l'écrou à tête hémisphérique 56, il est prévu un évidement 76 à travers la fourchette, de dimensions supérieures à celles de l'écrou hémisphérique. L'évidement est relié au trou 74 par une fente 78 de largeur légèrement supérieure au diamètre du câble.

Ainsi, la même fourchette peut être utilisée pour obtenir deux rapports de démultiplication. On pourrait de la même façon former dans la fourchette une troisième ou plusieurs autres boutonnières.

## Revendications

1. Fourchette de débrayage (70) pour un embrayage à câble de véhicule automobile, ladite fourchette de débrayage étant montée pivotante par un point de sa longueur (60) situé entre ses extrémités, de façon à transmettre le mouvement d'un câble (28) actionné par la pédale d'embrayage (26) à une butée de débrayage (32), ladite fourchette de débrayage comprenant une première extrémité fourchue (40, 42) qui coopère avec ladite butée de débrayage et une seconde extrémité (52) dans laquelle est formée une boutonnière concave (50) percée en son centre d'un trou (52) pour le passage du câble, la position relative dudit point de pivotement par rapport à ladite première extrémité de la fourchette et à ladite boutonnière définissant un premier rapport de démultiplication, ladite fourchette étant **caractérisée en ce qu'**elle comporte également entre ledit point de pivotement (60) et la première boutonnière (50) au moins une autre boutonnière (72) percée d'un trou (74) pour le passage dudit câble et qui correspond à au moins un second rapport de démultiplication.

2. Fourchette de débrayage selon la revendication 1, dans laquelle le câble (28) est muni de l'écrou hémisphérique (56) avant qu'il soit introduit dans l'un des trous des boutonnières, **caractérisée en ce que** le trou (52) de la première boutonnière 50 se prolonge jusqu'à ladite seconde extrémité par une fente (54) à travers laquelle le câble muni de l'écrou peut être passé latéralement jusqu'audit trou et **en ce que** le trou (74) de chacune desdites autres boutonnières (72) se prolonge par une fente (78) qui débouche dans un évidement (76) à travers lequel l'écrou peut être passé.
